# EUROPÄISCHE PATENTANMELDUNG

(11) **EP 2 767 855 A1**
(43) Veröffentlichungstag der Anmeldung: **20.08.2014**
(21) Anmeldenummer: 13006053.6
(22) Anmeldetag: 21.12.2013
(51) Int. Cl.: G02B 6/44

(54) **Glasfaser-Verteilerschrank oder -Verteilerschrankgestell**

(30) Priorität: 14.02.2013 DE 102013002543
(71) Anmelder: Langmatz GmbH, 82467 Garmisch-Partenkirchen (DE)
(72) Erfinder: Ertl, Werner, 82490 Farchant (DE); Wankmüller, Andreas, 82481 Mittenwald (DE)
(74) Vertreter: Flosdorff, Jürgen

(57) **Zusammenfassung**

Der Glasfaser-Verteilerschrank oder -Verteilerschrankgestell mit wenigstens einer Tür und einem Kabelkanal (3) für Glasfaserkabel im Bodenbereich, ist dadurch gekennzeichnet, dass die wenigstens eine Tür (5) oberhalb des Kabelkanals (3) endet und an ihrer unteren Randkante mit einer schwenkbaren Klappe (7) versehen ist, die im unverschwenkt herabhängendem Zustand den Zugang zu dem Kabelkanal wenigstens teilweise abdeckt und im verschwenkten Zustand den Zugang zu dem Kabelkanal frei gibt.

## Beschreibung

Die Erfindung betrifft einen Glasfaser-Verteilerschrank oder ein - Verteilerschrankgestell, der bzw. das wenigstens eine Tür und im Bodenbereich einen Kabelkanal für Glasfaserkabel aufweist. Das Verteilerschrankgestell kann rahmenartige Stützen und Streben haben und an den Seiten und/oder der Rückseite offen sein, wobei mehrere Gestelle aneinander befestigbar sind. Das Verteilerschrankgestell kann aber auch mit einer Rückwand und/oder mit Seitenwänden versehen sein und damit ein Schrankgehäuse bilden.

Von dem Kabelkanal aus können die Glasfaserkabel zu Spleißstellen in dem Schrank oder Gestell verlegt werden.

Ein derartiger Glasfaser-Verteilerschrank oder Gestell kann an seiner Vorderseite auch mehrere schwenkbare Türen aufweisen. Bei den bisherigen Verteilerschränken überdeckt die Tür bzw. überdecken die Türen den Kabelkanal, so dass dieser nur dann zur Vorderseite des Schranks hin offen ist, wenn die Tür bzw. die Türen geöffnet werden. Dies ist für eine Arbeitsperson, die die Glasfaserkabel verlegt, sehr umständlich. Wenn beispielsweise Glasfaserkabel bei einem Verteilerschrank, der drei nebeneinander angeordneten Türen hat, Glasfaserkabel in den Bereich hinter der mittleren Tür eingeführt werden sollen, müssen die Kabel in ein seitliches Ende des Kabelkanals eingeführt werden und es müssen zwei Türen des Verteilerschranks geöffnet werden. Wenn - wie dies häufig der Fall ist - mehrere dieser Glasfaser-Verteilerschränke oder -Gestelle nebeneinander angeordnet sind, ist die Handhabung der Glasfaserkabel zusätzlich erschwert.

Der Erfindung liegt die Aufgabe zugrunde, einen Glasfaser-Verteilerschrank oder ein Glasfaser-Verteilerschrankgestell anzugeben, bei dem die obigen Nachteile vermieden sind.

Diese Aufgabe wird erfindungsgemäß durch die Merkmale des Patentanspruchs 1 gelöst. Vorteilhafte Ausgestaltungen der Erfindung sind in den Unteransprüchen gekennzeichnet.

Die Erfindung sieht vor, dass die wenigstens eine Tür oberhalb des Kabelkanals endet. Wenn mehrere Türen angeordnet sind, enden alle oberhalb des Kabelkanals. Damit ist der Kabelkanal von der Vorderseite des Schranks oder Gestells aus zugänglich, so dass Glasfaserkabel, die in den Verteilerschrank (-Gestell) eingeführt werden sollen, auf bequeme Weise in dem Kabelkanal eingelegt werden können, ohne dass hierzu die Tür oder Türen geöffnet werden müssen. Dabei ist die wenigstens eine Tür nach einem besonders vorteilhaften Vorschlag der Erfindung mit ihrem unteren Randbereich an der Rückwand oder an rückwärtigen Rahmengliedern befestigt, so dass weder die Tür selbst noch ihre Halterung den frontalen Zugang zu dem Kabelkanal überdecken, so dass Glasfaserkabel von der Stirnseite des Gehäuses aus in den Kabelkanal eingelegt werden können.

Hierzu wird im einzelnen vorgeschlagen, dass die wenigstens eine Tür über eine Strebe mit der Rückwand oder rückwärtigen Stützen oder Streben verbunden ist. Dabei kann aus Stabilitätsgründen die Tür auch über mehrere Streben rückseitig befestigt sein, wobei der frontale und seitliche Zugang zu dem Kabelkanal von Streben frei bleiben sollte.

Mit großem Vorteil wird ferner vorgeschlagen, dass die wenigstens eine Tür an ihrer unteren Randkante mit einer schwenkbaren Klappe versehen ist, die im unverschwenkten Zustand den stirnseitigen Zugang zu dem Kabelkanal wenigstens teilweise abdeckt und im verschwenkten Zustand den Zugang zu dem Kabelkanal frei gibt. Wenn der Verteilerschrank mehrere nebeneinander angeordnete Türen aufweist, ist jede Tür mit einer solchen Klappe versehen.

Die wenigstens eine Klappe ist zweckmäßigerweise über eine Scharnierein-richtung an der unteren Randkante der zugehörigen Tür angelenkt und hängt infolge von Schwerkraft senkrecht von der Tür herab. Wenn eine Arbeitsperson Glasfaserkabel in den Kabelkanal einlegen will, braucht sie nur die Klappe nach innen zu drücken, womit der Zugang zu dem Kabelkanal frei ist.

Nach einem weiteren Vorschlag der Erfindung ist der Kabelkanal an der Stirnseite des Gehäuses durch einen feststehenden streifenförmigen Wandabschnitt begrenzt, der zweckmäßigerweise am Boden des Kabelkanals befestigt ist und mit der wenigstens einen Tür fluchtet. Dieser streifenfömige Wandabschnitt sollte mit geringem Spiel an die Klappe angrenzen, so dass bei unverschwenkter Klappe der Kabelkanal zur Frontseite des Gehäuses hin optisch geschlossen ist. Dies hat auch zur Folge, dass keine unerwünschten Schmutzpartikel etc. in den Kabelkanal eintreten können. Außerdem hält der streifenförmige Wandabschnitt die eingelegten Glasfaserkabel sicher in dem Kabelkanal. Hinter der schwenkbaren Klappe ist in dem Gehäuse genügend Freiraum, um diese soweit nach hinten zu drücken, dass die Glasfaserkabel bequem in den Kabelkanal einlegbar sind.

Die wenigstens eine Tür ist an ihrem unteren Randbereich scharnierartig, d.h. mit Bolzen und Ösen an der Strebe befestigt, wobei ihr oberer Randbereich entsprechend an einem oberen Rahmenteil des Gehäuses angebracht ist.

Bei dem erfindungsgemäßen Glasfaser-Verteilerschrank oder -schrankgestell ist der Kabelkanal bei geschlossenen Türen über seine gesamte Länge von der Vorderseite des Gehäuses aus frei zugänglich, und trotzdem ist die Stirnseite des Gehäuses auch im Bereich des Kabelkanals normalerweise geschlossen. Dies ist mit einfachen, kostengünstigen Mitteln erreicht.

Weitere Einzelheiten der Erfindung ergeben sich aus der nachfolgenden Beschreibung einer bevorzugten Ausführungsform eines Glasfaser-Verteilerschrankgestells. Dabei zeigen:

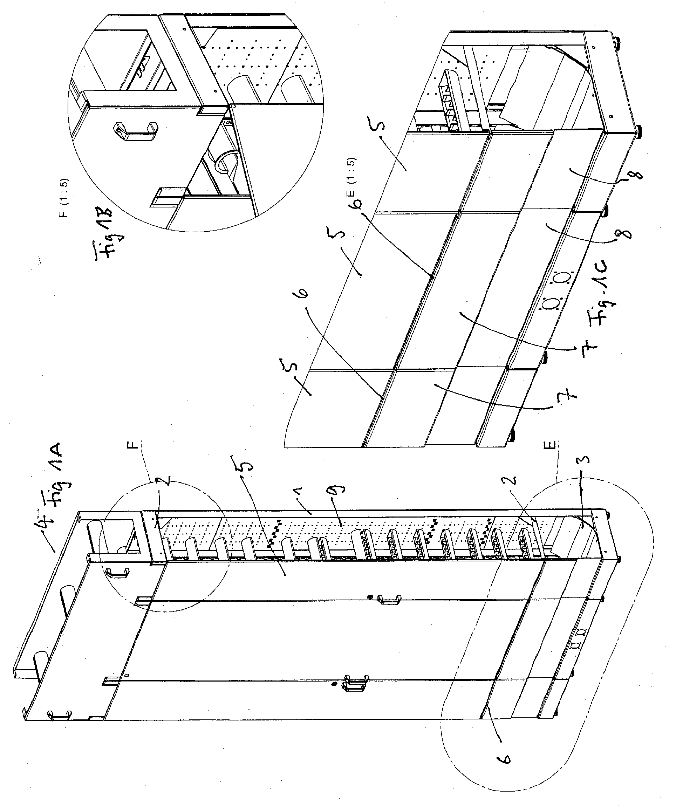

- Figur 1A: eine perspektivische Ansicht des Gestells mit drei geschlossenen Türen;
- Figur 1B: eine vergrößerte Darstellung des Bereichs F der Figur 1A;
- Figur 1C: eine vergrößerte Darstellung des Bereichs E in Figur 1A und

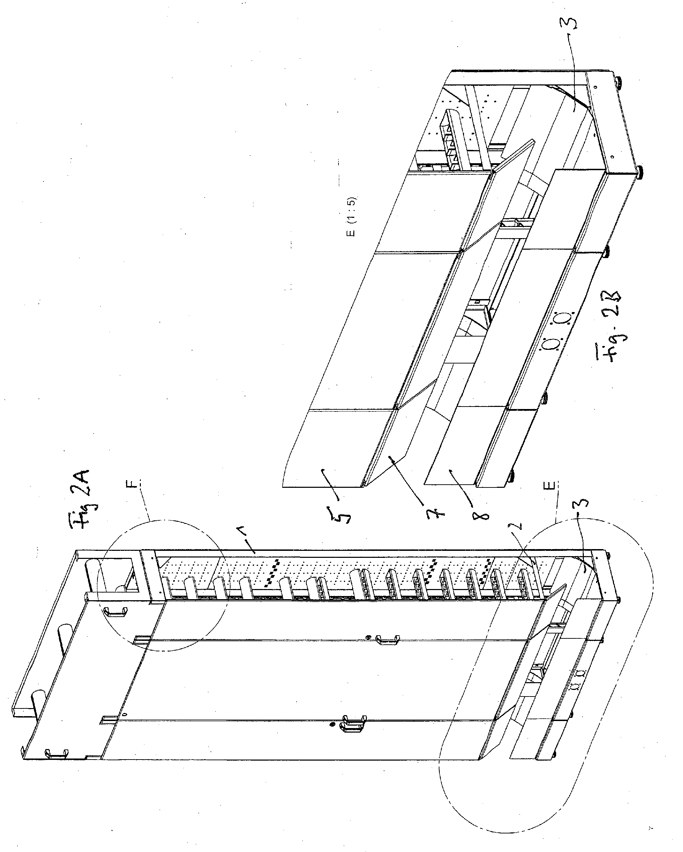

- Figuren 2A und 2B: das Verteilerschrankgestell gemäß den Figuren 1A bis 1C mit verschwenkten Klappen.

In den Figuren ist ein Glasfaser-Verteilerschrank-Gestell abgebildet, das eine rahmenartige Konstruktion aus Stützen 1 und Streben 2 enthält. Im unteren Bereich ist ein Kabelkanal 3 ausgebildet, in den Glasfaserkabel eingelegt werden, die ins Innere des Gestells verlegt werden. Den oberen Abschluss des Gestells bildet ein oberes Rahmenteil 4, das auch als Kabelkanal nutzbar ist.

Bei der dargestellten Ausführungsform ist auch eine Rückwand 9 vorgesehen, wohingegen das Schrankgestell keine Seitenwände hat.

Die Stirnseite des Gestells ist durch drei schwenkbare Türen 5 gebildet. Die Türen 5 enden oberhalb des Kabelkanals 3. Die Türen 5 sind an ihrem oberen Endbereich über Scharniere an dem oberen Rahmenteil 4 und an ihren unteren Endbereichen scharnierartig mit horizontalen Streben 2 verbunden, die mit der Rückwand 9 oder rückwärtigen Traggliedern verbunden sind und die Türen 5 gemeinsam mit dem oberen Rahmenteil 4 tragen.

An den unteren Randkanten 6 der Türen 5 sind streifenförmige Klappen 7 über Scharniere befestigt. Die Klappen 7 hängen durch Schwerkraft oder Federkraft herab und fluchten mit darunter angeordneten Wandabschnitten 8, die fest-stehend am vorderen Rand des Kabelkanals 3 befestigt sind.

Anders als dargestellt, kann ein einziger durchgehender Wandabschnitt angeordnet sein. Zwischen den Unterkanten der Klappen 7 und der Oberkante des streifenförmigen Wandabschnitts 8 verbleibt ein geringes Spiel, damit die Klappen 7 frei beweglich sind.

Zum Einlegen von Glasfaserkabels in den Kabelkanal 3 werden lediglich die Klappen 7 nach hinten gedrückt, so dass ohne Öffnung von Türen 5 beispielsweise Glasfaserkabel von einem Gestell durch den Kabelkanal eines angrenzenden Gestells weitergeführt werden können. Zum Einführen der in einen Kabelkanal eingelegten Glasfaserkabel ins Innere des Gestells oder Schranks muss dann die jeweilige Tür geöffnet werden.

Es wird betont, dass die Erfindung nicht auf die beschriebenen und dargestellten Ausführungsformen beschränkt ist, Vielmehr sind alle offenbarten Merkrnale auf jede sinnvolle Weise einzeln miteinander kombinierbar.

## Patentansprüche

1. Glasfaser-Verteilerschrank oder -Verteilerschrankgestell mit wenigstens einer Tür und einem Kabelkanal für Glasfaserkabel im Bodenbereich,
**dadurch gekennzeichnet,**
**dass** die wenigstens eine Tür (5) oberhalb des Kabelkanals (3) endet.

2. Glasfaser-Verteilerschrank nach Anspruch 1,
**dadurch gekennzeichnet,**
**dass** die wenigstens eine Tür (5) mit ihrem unteren Randbereich an einer Rückwand (9) oder an rückwärtigen Rahmenelementen (1) befestigt ist.

3. Glasfaser-Verteilerschrank nach den Ansprüchen 1 oder 2,
**dadurch gekennzeichnet,**
**dass** die wenigstens eine Tür (5) an ihrer unteren Randkante (6) mit einer schwenkbaren Klappe (7) versehen ist, die im unverschwenkt herabhängendem Zustand den Zugang zu dem Kabelkanal (3) wenigstens teilweise abdeckt und im verschwenkten Zustand den Zugang zu dem Kabelkanal (3) frei gibt.

4. Glasfaser-Verteilerschrank nach den Ansprüchen 1 bis 3,
**dadurch gekennzeichnet,**
**dass** am Boden des Kabelkanals (3) ein streifenförmiger Wandabschnitt (8) befestigt ist, der mit der wenigstens einen Tür (5) fluchtet und an deren Klappe (7) angrenzt.

5. Glasfaser-Verteilerschrank nach den Ansprüchen 1 bis 4,
**dadurch gekennzeichnet,**
**dass** die wenigstens eine Tür (5) über wenigstens eine Strebe (2) mit der Rückwand (9) oder rückwärtigen Rahmenelementen verbunden ist.

6. Glasfaser-Verteilerschrank nach Anspruch 5,
**dadurch gekennzeichnet,**
**dass** die wenigstens eine Tür (5) scharnierartig mit der Strebe (2) verbunden ist.

7. Glasfaser-Verteilerschrank nach den Ansprüchen 1 bis 6,
**dadurch gekennzeichnet,**
**dass** die wenigstens eine Klappe (7) über Scharniere an der unteren Randkante (6) der wenigstens einen Tür (5) angelenkt ist.
